# EUROPEAN PATENT SPECIFICATION

(11) **EP 4 348 994 B1**
(45) Date of publication and mention of the grant of the patent: **25.11.2026**
(21) Application number: 21943244.0
(22) Date of filing: 24.05.2021
(51) Int. Cl.: H04M 1/72463, B60K 35/00, B60W 50/14, H04M 1/72448, H04W 4/48, B60K 35/10, B60K 35/60, B60K 35/22, B60K 35/28, B60K 35/80, B60K 35/85, B60K 35/29, H04M 1/72409

(54) **MOBILE DEVICE DISTRACTION MANAGEMENT**
ABLENKUNGSMANAGEMENT EINER MOBILEN VORRICHTUNG
GESTION DE DISTRACTION DE DISPOSITIF MOBILE

(43) Date of publication of application: 10.04.2024
(73) Proprietor: Driving Management Systems, Inc., Colorado Springs CO 80906 (US)
(72) Inventor: WEISSLER, Paul N., Colorado Springs, Colorado 80906 (US); JOHNSON, Kyle, Colorado Springs, Colorado 80906 (US); AZZI, Robert M., Colorado Springs, Colorado 80906 (US); JOHNSTON, Laura P.T., Colorado Springs, Colorado 80906 (US)
(74) Representative: Grünecker Patent- und Rechtsanwälte PartG mbB
(86) International application number: PCT/US2021/033845
(87) International publication number: WO 2022/250646

(56) References cited:
- EP-A1- 3 530 012
- US-A1- 2013 072 174
- US-A1- 2016 088 469
- US-A1- 2017 006 151
- US-A1- 2019 158 654
- US-A1- 2019 182 749
- US-A1- 2019 349 470
- US-B1- 10 672 249

## Description

### EIELD OE THE INVENTION

The present invention relates to a method for managing driver interactions with a mobile device, and in particular, an iOS mobile device.

### BACKGROUND OE THE INVENTION

Distracted driving includes any activity that diverts attention from the primary task of driving. As mobile devices have become ubiquitous in modem society, efforts to mitigate distracted driving have gained increased emphasis. For example, social media applications, group chats, texting, and internet browsing can divert attention from the road and add to a driver's cognitive workload. Particularly among commercial vehicle fleets, it is preferable to disable some or all of these smartphone applications while simultaneously permitting calls and navigation functions. Mobile devices that are used by fleet drivers may be provided by the fleet operator and managed by a Mobile Device Management System (MDM) or may be personal devices used by the driver.

From EP3530012A1, a method for preventing the use of a mobile device in a motor vehicle is known. US2013072174A1 discloses a device for automatically disabling communication features of a vehicle driver's wireless phone or device. There exists a number of methods for limiting access to selected functions on mobile devices. For mobile devices running an Android operating system (OS), a third-party software application can fully control the home screen to limit access to only whitelisted applications. For mobile devices running iOS, however, this functionality is generally not available. Applications on iOS mobile devices can be closed by the user at any time, and applications cannot determine which other application is currently in the foreground and in use. An existing solution for iOS mobile devices includes an opt-in Do Not Disturb that locks the device entirely. However, this mode requires voluntary action by the driver and can be exited at any time while driving. Further, it is desirable to allow the limited use of some applications while the vehicle is in motion, for example navigation applications and call functionality.

Accordingly, there remains a continued need for a method for selectively preventing access to certain applications for mobile devices, including mobile devices running iOS, to limit distractions caused by a mobile device while driving. This object is solved by a method according to claim 1 or a mobile device according to claim 8.

### SUMMARY OF THE INVENTION

A method for managing user interactions with a mobile device is provided. The mobile device comprises WiFi, Bluetooth, and/or cellular hardware. The method generally includes the use of notifications and VoIP calls to prompt a user to return to a smartphone application while within a vehicle. The smartphone application, when active as the foreground application, provides a virtual barrier between the driver and other applications, while permitting navigation and call functionality.

In one embodiment, the method includes determining that the smartphone application is running as a background application while the mobile device is in proximity to a vehicle beacon. The method then includes generating successive local notifications- including banner alerts and sound alerts-at the mobile device to prompt the user to restore the smartphone application to the device foreground. If the user does not return to the smartphone application, the method includes generating, by the smartphone application a simulated voice over internet protocol (VoIP) call to the mobile device that interrupts any application running as the foreground application and, when accepted, causes the mobile device to run the smartphone application as the foreground application. If, however, the user declines the VoIP call, the method includes generating further VoIP calls until accepted by the user, thereby returning the smartphone application to the foreground of the mobile device.

In another embodiment, the method includes notifying a backend server that the mobile device is powered on and in range of a vehicle beacon but that the smartphone application is not running or has been terminated by the user. The method then includes initiating a remote notification from the backend server in the form of a VoIP call. The VoIP call causes the smartphone application to automatically launch. If the call is declined, the smartphone application runs as a background application, and if the call is accepted, the smartphone application runs as the foreground application. The method proceeds to monitor the status of the smartphone application as running as the foreground application or as a background application. When running as the foreground application, the smartphone application prevents interaction with other smartphone functionality while permitting access to limited functionality, including navigation and call functionality.

The method of the present invention prevents certain driver interactions with a mobile device using local notifications and VoIP calls to render most smartphone applications effectively unusable while within a moving vehicle. During this time, the driver can continue to receive banner alerts with turn-by-turn navigation instructions, while also retaining call functionality. The present invention is uniquely tailored for iOS devices, providing a robust alternative to autonomous single app mode (ASAM) and MDM policy control solutions, but can be used across Android devices as well. The use of the mobile device to make and receive phone calls can also be monitored to prevent distracted driving. If the driver is on a call while in motion, the smartphone application can initiate a continuous stream of push notifications, making it difficult or impractical for the driver to continue with the call. The smartphone application can also detect when the mobile device screen is turned off using a combination of timing and screen brightness. When the screen is off, no notifications are presented to prevent distracting the driver unnecessarily.

These and other features of the invention will be more fully understood and appreciated by reference to the description of the embodiments and the drawings.

### BRIEF DESCRIPTION OF THE DRAWINGS

Figure 1 is a mobile device for use with a method of managing driver interactions with the mobile device in accordance with one embodiment.
Figure 2 is a system diagram for a method of managing driver interactions in accordance with one embodiment of the invention.
Figure 3 a flow chart for a method of managing driver interactions with a mobile device in accordance with one embodiment of the invention.

### DETAILED DESCRIPTION OF THE CURRENT EMBODIMENT

As discussed herein, the current embodiment relates to a method for managing certain user interactions with a mobile device, optionally an iOS mobile device. The method generally includes the use of notifications and actual or simulated VoIP calls to generate a virtual barrier around certain smartphone applications while within a moving vehicle. Though described below in connection with an iOS mobile device, the present method is well suited for other mobile devices, including Android mobile devices.

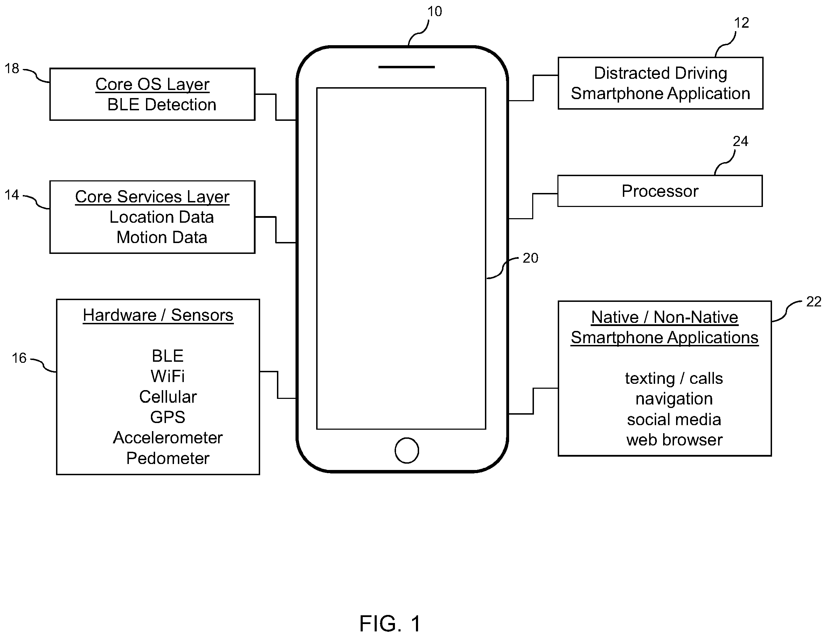

Before the method is discussed in detail, a system architecture for implementation of the method is provided. Referring to Figure 1, the system architecture according to one embodiment includes a mobile device 10. The mobile device 10 includes a distracted driving smartphone application 12 that operates in an application layer of the mobile device. The smartphone application 12 monitors certain functionality of the mobile device 10. For example, the smartphone application 12 receives location information from the Core Location Framework of the Core Services Layer 14. The Core Location Framework provides the mobile device's geographic location to the smartphone application 12, the geographic location being derived from one or more sensors 16 in the form of WiFi, Bluetooth and/or cellular hardware. The smartphone application 12 also receives motion information from the Core Motion Framework of the Core Services layer 14. The Core Motion Framework provides motion-related data from onboard sensors 16, including accelerometers, gyroscopes, and/or pedometers. The mobile device 10 can also include a Core OS Layer 18 and a touch screen 20. The Core OS Layer 18 supports Bluetooth detection, and the touch screen 20 provides a graphical-user-interface (GUI) for interaction with one or more third-party applications 22 (native or non-native) that are also resident on the application layer of the mobile device, including navigation applications, texting applications, social media applications, and internet browsers. The smartphone application 12 and the third-party applications 22 are executable by the mobile device processor 24 as the foreground application or as one of several background applications.

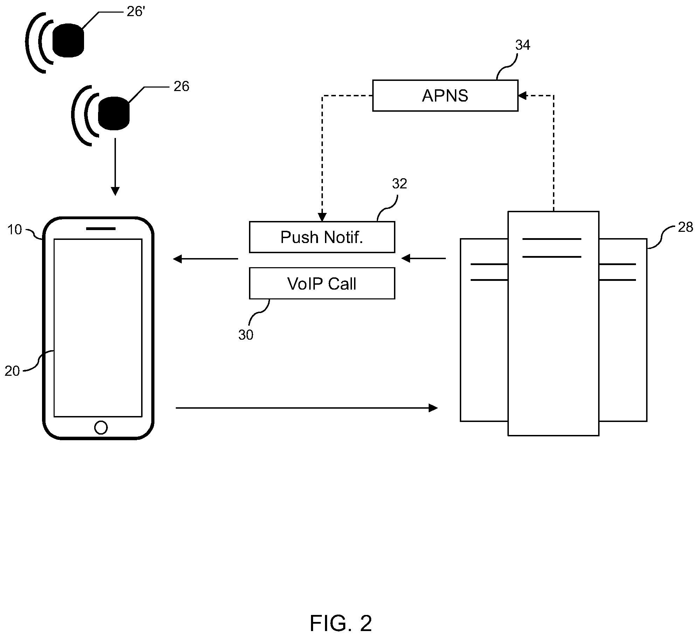

As shown in Figure 2, the system architecture includes one or more network beacons 26, 26' located within a vehicle interior for wireless communication with the mobile device 10. The network beacons 26, 26' are adapted to broadcast one or more RF signals to the mobile device 10. For example, a Bluetooth Low Energy (BLE) network beacon can broadcast short-range data packets at regular intervals that are detected at the Core OS layer 18 of the mobile device 10. Each data packet can contain a unique identifier (UID) associated with the BLE beacon. The received signal strength indicator (RSSI) can be used by the smartphone application 12 to determine relative location within a vehicle interior. For example, an RSSI from a single BLE beacon that is above a predetermined threshold can indicate the presence of a mobile device 10 within a vehicle cab. In other embodiments the vehicle cab can include two or more BLE beacons 26, 26'. The BLE beacon 26, 26' with the highest RSSI can represent the BLE beacon closest to the mobile device 10, which can be used to determine the relative location of the mobile device.

As also shown in Figure 2, the smartphone application 12 is in data communication with a backend server 28. The backend server 28 includes machine readable instructions that, when executed, cause the backend server 28 to deliver a remote notification to the mobile device 10 if a preselected criteria is met. The preselected criteria can include, for example, the smartphone application is terminated by the user. Other criteria can include proximity of the mobile device 10 to an in-vehicle beacon for a predetermined minimum time period while the smartphone application 12 is not running. The backend server 28 can respond with a remote notification, for example a VoIP call 30 or a push notification 32, to cause the smartphone application 12 to automatically launch. The backend server 28 can optionally initiate the remote notification through an Application Programming Interface (API). For example, the backend server 28 can cause an Apple Push Notification Service (APNS) 34 to send a remote notification to cause the smartphone application 12 to automatically launch. Alternatively, local notifications, which can include an escalating series of banner alerts and simulated VoIP calls, can be used to prompt the user to bring the smartphone application 12 to the foreground of the mobile device touch screen 20 while within range of an in-vehicle beacon 26, 26'. Once the smartphone application 12 is returned to the foreground, the user can receive banner alerts with turn-by-turn navigation instructions for a given route, while also retaining call functionality.

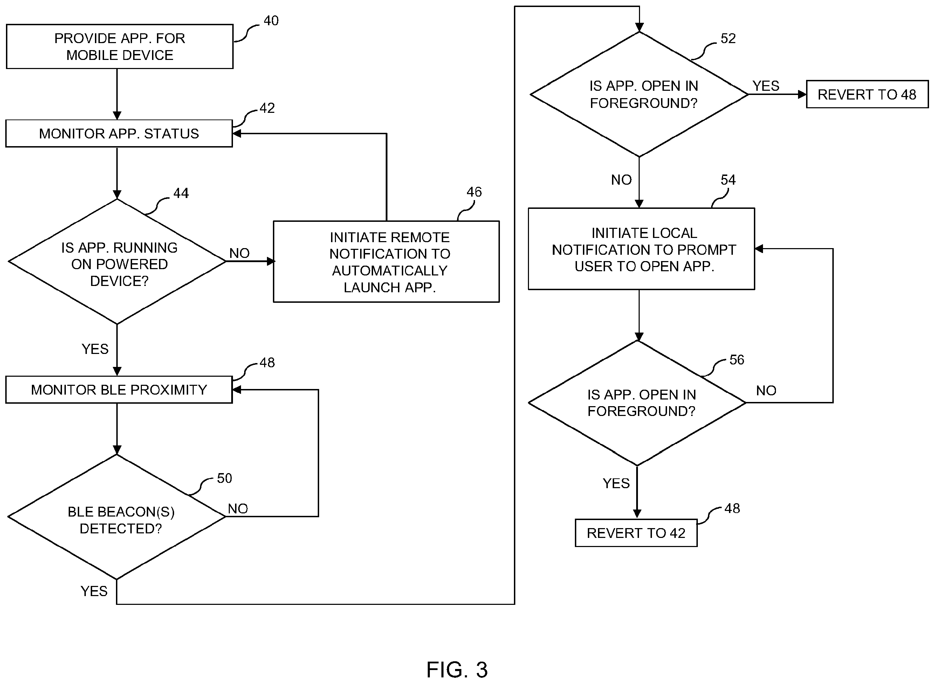

Referring now to Figure 3, a flow chart depicts a method of managing driver interactions with a mobile device 10 with local notifications and remote notifications. The method generally includes providing a distracted driving smartphone application 12 for execution by the mobile device 10 at step 40. The mobile device 10 is adapted to detect a beacon signal, extract beacon data, and pass the beacon data to the smartphone application 12, all of which are typically performed at the Core OS Layer 18 of the mobile device operating system. The mobile device 10 is also adapted to detect movement and location data of the mobile device 10 and pass the movement and location data to the smartphone application 12, all of which are typically performed at the Core Services Layer 14 of the mobile device operating system.

At step 42, the method includes monitoring the operating status of smartphone application 12. At decision step 44, the method includes determining whether the smartphone application 12 is running (as the foreground application or as a background application) on the mobile device 10. If the smartphone application 12 is not running, the application will launch automatically at step 46. If the smartphone application is running at decision step 44, the method includes monitoring for a predetermined criteria at step 48. In the present embodiment, the predetermined criteria includes proximity to one or more network beacons within a vehicle interior, for example BLE beacons, which indicates the presence of the mobile device 10 within the vehicle. In particular, the smartphone application determines whether an in-vehicle beacon is detected with at least a minimum RSSI. In other embodiments, the predetermined criteria includes a minimum speed, for example at least 5 mph. In still other embodiments, the predetermined criteria includes proximity to one or more in-vehicle beacons in combination with a minimum speed. If the predetermined criteria is not detected at decision step 50, the method reverts to step 48. If however the predetermined criteria is detected at decision step 50, indicating the mobile device is present within a (moving) vehicle, the method proceeds to decision step 52.

At decision step 52, the method includes determining if the smartphone application 12 is running as the foreground application, which would prevent driver interactions with other applications-with the exception of call and navigation functionality. As used herein, an application running in the "foreground" or "foreground application layer" is an open application whose user interface (UI) is visible on the touch screen display. As also used herein, an application running in the "background" or "background application layer" is an open application whose UI is not visible on the touch screen display (e.g., when a user exits a given application without closing, it reverts to the background). If the smartphone application 12 is not running in the foreground, the smartphone application 12 initiates a local notification at step 54. The local notification can include a banner alert to prompt the user to return to the smartphone application 12. If the user does not return to the smartphone application 12 at decision step 52, the method includes initiating a further local notification, in a continuous loop, until use of the mobile device 10 becomes impractical.

The local notifications can initially include alerts, sounds, or badges, each being intended to prompt the driver to return to the distracted driving smartphone application 12. The frequency of the local notifications can escalate through two or more levels in order to render the use of the mobile device 10 impractical. The local notifications include a simulated VoIP call to the mobile device. If the user declines the simulated VoIP call, a further VoIP call is initiated. If however the user answers the simulated VoIP call, the smartphone application 12 is automatically brought to the foreground. The call automatically terminates after an abbreviated period, for example several seconds. The smartphone application 12 provides a virtual barrier to other applications and includes limited visual information so as to not impact the driver's cognitive workload while the vehicle is moving. The simulated VoIP call can deliver the automated or pre-recorded message to the driver, for example reminding the driver to run the smartphone application at all times while driving. Other automated or pre-recorded messages are possible in other embodiments.

To reiterate, the method of the present invention prevents certain user interactions with a mobile device by initiating alerts, sounds, badges, and VoIP calls to render other smartphone applications effectively unusable while within a vehicle. The present invention is uniquely tailored for iOS devices, providing a robust alternative to ASAM and MDM policy solutions, but can be used across Android devices as well. The use of the mobile device 10 to make and receive phone calls can also be monitored to prevent distracted driving. If the driver is on a call while in motion for a predetermined time period, the smartphone application 12 can initiate a continuous stream of push notifications, making it difficult or impractical for the driver to continue with the call. The smartphone application 12 can also detect when the mobile device screen is turned off, optionally using a combination of timing and screen brightness.

In these and other embodiments, the smartphone application 12 can require certain smartphone settings to enable proper functionality. For example, the smartphone settings can include the following: Bluetooth (on), Location Services (always on), Cellular Data (on), and Notifications (on). If the smartphone settings are not configured correctly, the smartphone application 12 reports a non-conforming setting status to a cloud service. When in receipt of this information, the cloud service can generate reports and/or compliance alerts, optionally in real time. For example, the cloud service can immediately notify an enterprise of an improper setting configuration by a commercial driver, potentially prompting a call to the driver. The cloud service can also notify desired parties of the following events: termination of the smartphone application 12, movement of the smartphone application 12 to the background, a lost GPS signal, or the use of the smartphone to place an emergency call. These events can prompt a range of desired actions in real time, optionally immediately upon receipt of this information. For example, in the case of a lost GPS signal (which occurs in tunnels and is out of the user's control), the smartphone can unlock, temporarily permitting full access to smartphone functionality until the GPS signal is restored and all conditions are met to safely re-lock the smartphone. This information can also form the basis for reports, providing enterprises with additional tools for incentivizing and tracking good driving habits while detecting and correcting back driving habits.

To further illustrate the versatility of the present invention, three possible examples are presented below. These examples are intended to be non-limiting, and the present method can be used in other examples as desired.

### EXAMPLE 1

In one example of the disclosure, a commercial driver includes an iOS mobile device. The mobile device is powered on and is within range of an in-vehicle BLE beacon, but the driver has not launched the distracted driving smartphone application. In this case, the application will automatically launch itself within a short time frame and will operate in the background until brought to the foreground by the user. Once in the foreground, the distracted driving smartphone application provides a virtual barrier between the driver and other smartphone applications that may otherwise add to the driver's cognitive workload.

### EXAMPLE 2

In an example according to the invention, a commercial driver includes an iOS mobile device with the distracted driving smartphone application running as a background application. When within a vehicle cab, the smartphone application detects proximity to an in-vehicle BLE beacon. The smartphone application initiates a local notification in the form of banner alerts, sounds, or badges that prompt the driver to return to the smartphone application as the foreground application when the vehicle is in motion. If the driver does not return to the smartphone application after a predetermined time period has elapsed, the smartphone application initiates a simulated VoIP call to the mobile device, which interrupts any third-party application operating in the foreground application layer. By accepting the simulated VoIP call, which can contain an automated or pre-recorded message to the driver, the mobile device brings the smartphone application to the foreground. As in the prior example, the smartphone application provides a virtual barrier between the driver and other smartphone applications that may otherwise add to the driver's cognitive workload.

### EXAMPLE 3

In another example according to the invention, a commercial driver includes an iOS mobile device that is administered as part of an MDM program. The mobile device includes a distracted driving smartphone application and an ASAM policy. The ASAM policy includes instructions that trigger a VoIP call from a cloud server when the smartphone application is terminated on an iOS device that is connected to an in-vehicle BLE beacon. If the driver accepts the VoIP call, the iOS device brings the distracted driving smartphone application to the foreground. If the driver ignores the VoIP call, the distracted driving smartphone application launches as a background application. As the vehicle begins moving, the distracted driving smartphone application initiates a local notification to prompt the driver to open the distracted driving smartphone application which, if ignored, results in a simulated VoIP call as in Example 2 above. Once the distracted driving smartphone application is running as the foreground application in ASAM mode, the remaining applications are locked out. An MDM server can also generate manual calls to the mobile device containing automated or pre-recorded messages of essentially any kind.

## Claims

1. A method for preventing user interactions with a mobile device (10) comprising WiFi, Bluetooth, and/or cellular hardware, the method comprising:
providing (40) a smartphone application (12) for execution by the mobile device (10);
detecting (50), at the mobile device (10), one or more signals from an in-vehicle network beacon (26, 26');
determining (52) that the smartphone application (12) is not running as a foreground application while within range of the in-vehicle network beacon (26, 26'); and
generating (54) a plurality of local notifications at the mobile device (10) to prompt a user to return to the smartphone application (12), the plurality of local notifications including a banner alert or a sound alert;
**characterized in that**,
following the plurality of local notifications, generating (54), by the smartphone application (12), a simulated VoIP call to the mobile device (10) from the smartphone application (12) that interrupts any application running as the foreground application and, when answered, causes the mobile device (10) to run the smartphone application (12) as the foreground application.

2. The method of claim 1, wherein the plurality of local notifications include multiple local notifications that are generated with increasing frequency.

3. The method of claim 1, wherein the simulated VoIP call is a first VoIP call, the method further including immediately generating a second VoIP call in response to the user declining the first VoIP call.

4. The method of claim 1, wherein the simulated VoIP call includes an automated or pre-recorded message to the user of the mobile device (10).

5. The method of claim 1, wherein the in-vehicle network beacon (26, 26') is a BLE beacon (26, 26') and the WiFi, Bluetooth, and/or cellular hardware of the mobile device (10) comprises a Bluetooth transceiver.

6. The method of claim 5, the method further including measuring the received signal strength from the BLE beacon (26, 26').

7. The method of claim 1, further including notifying a backend server (28) that the mobile device (10) is within range of the in-vehicle network beacon (26, 26') and the smartphone application (12) has been terminated by the user.

8. A mobile device (10) comprising:
a processor (24);
WiFi, Bluetooth, and/or cellular hardware; and
a memory storing computer-executable instructions that, when executed by the processor (24), cause the mobile device (10) to perform the following:
detect (50) one or more signals from an in-vehicle beacon (26, 26');
determine (52) that a smartphone application (12) installed on the mobile device (10) is not running in a foreground application layer of the mobile device (10) while the mobile device (10) is within a predetermined range of the in-vehicle beacon (26, 26');
generate (54) a plurality of local notifications at the mobile device (10) to prompt a user to return to the smartphone application (12), the plurality of local notifications including at least one of a banner alert or a sound alert;
**characterized in that**
the generation (54) of the plurality of local notifications at the mobile device (10) is followed by a simulated VoIP call to the mobile device (10) generated by the smartphone application (12) that interrupts any application running in the foreground application layer and, when answered, causes the processor (24) to run the smartphone application (12) in the foreground application layer of the mobile device (10) to thereby prevent interaction with other smartphone applications.

9. The mobile device of claim 8, wherein the simulated VolP call includes an automated or pre-recorded message to the user of the mobile device (10).

10. The mobile device of claim 8, wherein the simulated VoIP call is a first VoIP call, the machine-executable instructions causing the processor (24) to generate a second VoIP call in response to the user declining the first VoIP call.

11. The mobile device of claim 8, wherein the machine-executable instructions cause the processor (24) to measure the received signal strength from the in-vehicle beacon (26, 26').

12. The mobile device of claim 8, wherein the machine-executable instructions cause the processor (24) to notify a backend server (28) that the mobile device (10) is within range of the in-vehicle beacon (26, 26') and/or wherein the machine-executable instructions cause the processor (24) to notify a backend server (28) that the mobile device (10) has moved at least a minimum distance.

13. The method of claim 7, further comprising:
causing, by the backend server (28), and in response to being notified that the mobile device (10) is within range of the in-vehicle network beacon (26, 26') and the smartphone application (12) has been terminated by the user, an application programming interface to initiate a VoIP call to the mobile device (10) that causes the mobile device (10) to automatically launch the smartphone application (12) as a background application.

14. The method of claim 13, wherein the VoIP call includes an automated or pre-recorded message to the user of the mobile device (10).

15. The method of claim 13, wherein the mobile device (10) is an iOS mobile device and the application programming interface includes an Apple Push Notification Service.

## Patentansprüche

1. Verfahren zum Verhindern von Benutzerinteraktionen mit einem mobilen Gerät (10), das WiFi-, Bluetooth- und/oder Mobilfunk-Hardware umfasst, wobei das Verfahren umfasst:
Bereitstellen (40) einer Smartphone-Anwendung (12) zur Ausführung durch das mobile Gerät (10);
Erfassen (50) eines oder mehrerer Signals/Signale von einer fahrzeuginternen Netzwerk-Bake (26, 26') an dem mobilen Gerät (10);
Feststellen (52), dass die Smartphone-Anwendung (12) nicht als eine Vordergrundanwendung ausgeführt wird, während sie sich in Reichweite der fahrzeuginternen Netzwerk-Bake (26, 26') befindet; und
Generieren (54) einer Vielzahl lokaler Benachrichtigungen an dem mobilen Gerät (10), um einen Benutzer aufzufordern, zu der Smartphone-Anwendung (12) zurückzukehren, wobei die Vielzahl lokaler Benachrichtigungen einen Banner-Alarm oder einen Ton-Alarm einschließt; **dadurch gekennzeichnet, dass**
Generieren (54) eines simulierten VoIP-Anrufs von der Smartphone-Anwendung (12) bei dem mobilen Gerät (10), der jede als Vordergrundanwendung ausgeführte Anwendung unterbricht und bei Annahme bewirkt, dass das mobile Gerät (10) die Smartphone-Anwendung (12) als Vordergrundanwendung ausführt, in Reaktion auf die Vielzahl lokaler Benachrichtigungen, durch die Smartphone-Anwendung (12).

2. Verfahren nach Anspruch 1, wobei die Vielzahl lokaler Benachrichtigungen mehrere lokale Benachrichtigungen einschließt, die mit zunehmender Frequenz generiert werden.

3. Verfahren nach Anspruch 1, wobei der simulierte VoIP-Anruf ein erster VoIP-Anruf ist und das Verfahren des Weiteren einschließt, dass unmittelbar in Reaktion darauf, dass der Benutzer den ersten VoIP-Anruf ablehnt, ein zweiter VoIP-Anruf generiert wird.

4. Verfahren nach Anspruch 1, wobei der simulierte VoIP-Anruf eine automatisierte oder voraufgezeichnete Nachricht an den Benutzer des mobilen Gerätes (10) einschließt.

5. Verfahren nach Anspruch 1, wobei die fahrzeuginterne Netzwerk-Bake (26, 26') eine BLE-Bake (26, 26') ist und die WiFi-, Bluetooth- und/oder Mobilfunk-Hardware des mobilen Gerätes (10) einen Bluetooth-Sendeempfänger umfasst.

6. Verfahren nach Anspruch 5, wobei das Verfahren des Weiteren Messen der von der BLE-Bake (26, 26') empfangenen Signalstärke einschließt.

7. Verfahren nach Anspruch 1, das des Weiteren einschließt, dass ein Backend-Server (28) darüber informiert wird, dass sich das mobile Gerät (10) in Reichweite der fahrzeuginternen Netzwerk-Bake (26, 26') befindet und die Smartphone-Anwendung (12) von dem Benutzer beendet worden ist.

8. Mobiles Gerät (10), das umfasst:
einen Prozessor (24);
WiFi-, Bluetooth- und/oder Mobilfunk-Hardware; sowie
einen Speicher, der computerausführbare Befehle speichert, die bei Ausführung durch den Prozessor (24) das mobile Gerät (10) veranlassen, folgende Schritte durchzuführen:
Erfassen (50) eines oder mehrerer Signals/Signale von einer fahrzeuginternen-Bake (26, 26');
Feststellen (52), das eine auf dem mobilen Gerät (10) installierte Smartphone-Anwendung (12) nicht in einer Vordergrund-Anwendungsschicht des mobilen Gerätes (10) ausgeführt wird, wenn sich das mobile Gerät (10) innerhalb einer vorgegebenen Reichweite der fahrzeuginternen Bake (26, 26') befindet;
Generieren (54) einer Vielzahl lokaler Benachrichtigungen an dem mobilen Gerät (10), um einen Benutzer aufzufordern, zu der Smartphone-Anwendung (12) zurückzukehren, wobei die Vielzahl lokaler Benachrichtigungen einen Banner-Alarm oder einen Ton-Alarm umfasst;
**dadurch gekennzeichnet, dass**
auf das Generieren (54) der Vielzahl lokaler Benachrichtigungen an dem mobilen Gerät (10) ein durch die Smartphone-Anwendung (12) generierter simulierter VoIP-Anruf folgt, der jegliche in der Vordergrund-Anwendungsschicht ausgeführte Anwendung unterbricht, und, wenn er beantwortet wird, den Prozessor (24) veranlasst, die Smartphone-Anwendung (12) in der Vordergrund-Anwendungsschicht des Mobilgerätes (10) auszuführen, um so Interaktion mit anderen Smartphone-Anwendungen zu verhindern.

9. Mobiles Gerät nach Anspruch 8, wobei der simulierte VoIP-Anruf eine automatisierte oder voraufgezeichnete Nachricht an den Benutzer des mobilen Gerätes (10) einschließt.

10. Mobiles Gerät nach Anspruch 8, wobei der simulierte VoIP-Anruf ein erster VoIP-Anruf ist und die maschinenausführbaren Befehle den Prozessor (24) veranlassen, in Reaktion darauf, dass der Benutzer den ersten VoIP-Anruf ablehnt, einen zweiten VoIP-Anruf zu generieren.

11. Mobiles Gerät nach Anspruch 8, wobei die maschinenausführbaren Befehle den Prozessor (24) veranlassen, die von der fahrzeuginternen Bake (26, 26') empfangene Signalstärke zu messen.

12. Mobiles Gerät nach Anspruch 8, wobei die maschinenausführbaren Befehle den Prozessor (24) veranlassen, einen Backend-Server (28) darüber zu informieren, dass sich das mobile Gerät (10) in Reichweite der fahrzeuginternen Bake (26, 26') befindet, und/oder wobei die maschinenausführbaren Befehle den Prozessor (24) veranlassen, einen Backend-Server (28) darüber zu informieren, dass sich das mobile Gerät (10) über wenigstens eine minimale Distanz bewegt hat.

13. Verfahren nach Anspruch 7, das des Weiteren umfasst:
Veranlassen, dass eine Programmierschnittstelle (API) einen VoIP-Anruf bei dem mobilen Gerät (10) einleitet, der das mobile Gerät (10) veranlasst, die Smartphone-Anwendung (12) automatisch als eine Hintergrundanwendung zu starten, durch den Backend-Server (28) in Reaktion darauf, dass mitgeteilt wird, dass sich das mobile Gerät (10) in Reichweite der fahrzeuginternen Netzwerk-Bake (26, 26') befindet und die Smartphone-Anwendung (12) durch den Benutzer beendet worden ist.

14. Verfahren nach Anspruch 13, wobei der VoIP-Anruf eine automatisierte oder voraufgezeichnete Nachricht an den Benutzer des mobilen Gerätes (10) einschließt.

15. Verfahren nach Anspruch 13, wobei das mobile Gerät (10) ein iOS-Mobilgerät ist und die Programmierschnittstelle einen Apple Push-Benachrichtigungsdienst einschließt.

## Revendications

1. Procédé pour empêcher des interactions utilisateur avec un dispositif mobile (10) comprenant un matériel WiFi, Bluetooth, et/ou cellulaire, le procédé comprenant les étapes consistant à :
fournir (40) une application de smartphone (12) pour exécution par le dispositif mobile (10) ;
détecter (50), au niveau du dispositif mobile (10), un ou plusieurs signaux provenant une balise réseau embarquée (26, 26') ;
déterminer (52) que l'application de smartphone (12) ne fonctionne pas en tant qu'application de premier plan pendant qu'elle se trouve à portée de la balise réseau embarquée (26, 26') ; et
générer (54) une pluralité de notifications locales au niveau du dispositif mobile (10) pour inviter un utilisateur à revenir à l'application de smartphone (12), la pluralité de notifications locales comportant une alerte bannière ou une alerte sonore ;
**caractérisé par**,
après la pluralité de notifications locales, la génération (54), par l'application de smartphone (12), d'un appel VolP simulé vers le dispositif mobile (10) depuis l'application de smartphone (12) qui interrompt toute application fonctionnant en tant qu'application de premier plan et, lors d'une réponse, amène le dispositif mobile (10) à faire fonctionner l'application de smartphone (10) comme l'application de premier plan.

2. Procédé selon la revendication 1, dans lequel la pluralité de notifications locales comporte de multiples notifications locales qui sont générées avec une fréquence croissante.

3. Procédé selon la revendication 1, dans lequel l'appel VolP simulé est un premier appel VolP, le procédé comportant en outre la génération immédiate d'un second appel VolP en réponse au refus par l'utilisateur du premier appel VolP.

4. Procédé selon la revendication 1, dans lequel l'appel VolP simulé comporte un message automatisé ou préenregistré destiné à l'utilisateur du dispositif mobile (10).

5. Procédé selon la revendication 1, dans lequel la balise réseau embarquée (26, 26') est une balise BLE (26, 26') et le matériel WiFi, Bluetooth et/ou cellulaire du dispositif mobile (10) comprend un émetteur-récepteur Bluetooth.

6. Procédé selon la revendication 5, le procédé comportant en outre la mesure de la force de signal reçu de la balise BLE (26, 26').

7. Procédé selon la revendication 1, comportant en outre la notification à un serveur dorsal (28) que le dispositif mobile (10) se trouve à portée de la balise réseau embarquée (26, 26') et que l'application de smartphone (12) a été stoppée par l'utilisateur.

8. Dispositif mobile (10) comprenant :
un processeur (24) ;
un matériel WiFi, Bluetooth et/ou cellulaire ; et
une mémoire stockant des instructions exécutables par ordinateur qui, lorsqu'elles sont exécutées par le processeur (24), amènent le dispositif mobile (10) à effectuer ce qui suit :
détecter (50) un ou plusieurs signaux provenant d'une balise embarquée (26, 26') ;
déterminer (52) qu'une application de smartphone (12) installée sur le dispositif mobile (10) ne fonctionne pas dans une couche d'application de premier plan du dispositif mobile (10) tandis que le dispositif mobile (10) se trouve dans une portée prédéterminée de la balise embarquée (26, 26') ;
générer (54) une pluralité de notifications locales au niveau du dispositif mobile (10) pour inviter un utilisateur à revenir à l'application de smartphone (12), la pluralité de notifications locales comportant au moins l'une d'une alerte bannière ou d'une alerte sonore ;
caractérisé en ce
la génération (54) de la pluralité de notifications locales au niveau du dispositif mobile (10) est suivie par un appel VolP simulé vers le dispositif mobile (10) généré par l'application de smartphone (12) qui interrompt toute application fonctionnant dans la couche d'application de premier plan et, lors d'une réponse, amène le processeur (24) à faire fonctionner l'application de smartphone (12) dans la couche d'application de premier plan du dispositif mobile (10) afin d'empêcher ainsi une interaction avec d'autres applications de smartphone.

9. Dispositif mobile selon la revendication 8, dans lequel l'appel VolP simulé comporte un message automatisé ou préenregistré destiné à l'utilisateur du dispositif mobile (10).

10. Dispositif mobile selon la revendication 8, dans lequel l'appel VolP simulé est un premier appel VolP, les instructions exécutables par machine amenant le processeur (24) à générer un second appel VolP en réponse au refus par l'utilisateur du premier appel VolP.

11. Dispositif mobile selon la revendication 8, dans lequel les instructions exécutables par machine amènent le processeur (24) à mesurer la force de signal reçu de la balise embarquée (26, 26').

12. Dispositif mobile selon la revendication 8, dans lequel les instructions exécutables par machine amènent le processeur (24) à notifier à un serveur dorsal (28) que le dispositif mobile (10) est à portée de la balise embarquée (26, 26') et/ou dans lequel les instructions exécutables par machine amènent le processeur (24) à notifier à un serveur dorsal plan (28) que le dispositif mobile (10) s'est déplacé sur au moins une distance minimale.

13. Procédé selon la revendication 7, comprenant en outre :
le fait d'amener, par le serveur dorsal (28), et en réponse à la notification que le dispositif mobile (10) est à portée de la balise réseau embarquée (26, 26') et que l'application de smartphone (12) a été stoppée par l'utilisateur, une interface de programmation d'application à initier un appel VolP vers le dispositif mobile (10) qui amène le dispositif mobile (10) à lancer automatiquement l'application de smartphone (12) en tant qu'application d'arrière-plan.

14. Procédé selon la revendication 13, dans lequel l'appel VolP comporte un message automatisé ou préenregistré destiné à l'utilisateur du dispositif mobile (10).

15. Procédé selon la revendication 13, dans lequel le dispositif mobile (10) est un dispositif mobile iOS et l'interface de programmation d'application comporte un service de notifications Push Apple.
